(19) **Europäisches Patentamt**

**European Patent Office**

**Office européen des brevets**

(11) **EP 0 772 331 B1**

(12) **EUROPEAN PATENT SPECIFICATION**

(45) Date of publication and mention
of the grant of the patent:
**26.02.2003  Bulletin 2003/09**

(51) Int Cl.7: **H04L 27/26**

(21) Application number: **96307849.8**

(22) Date of filing: **30.10.1996**

(54) **Correlation of OFDM signals**

Korrelation von OFDM-Signalen

Corrélation de signaux OFDM

(84) Designated Contracting States:
**BE DE FR IT**

(30) Priority:  **30.10.1995  GB 9522149**

(43) Date of publication of application:
**07.05.1997  Bulletin 1997/19**

(73) Proprietor: **BRITISH BROADCASTING
CORPORATION
London W1A 1AA (GB)**

(72) Inventors:
• **Stott, Jonathan Highton
Tadworth, Surrey, KT20 6NP (GB)**
• **Wells, Nicholas Dominic
Tadworth, Surrey, KT20 6NP (GB)**

(74) Representative: **Abnett, Richard Charles
REDDIE & GROSE
16 Theobalds Road
London WC1X 8PL (GB)**

(56) References cited:
**EP-A- 0 529 421          WO-A-95/03656**

EP 0 772 331 B1

**Description**

This invention relates to the correlation of orthogonal frequency-division multiplex (OFDM) signals such as proposed for use in digital audio broadcasting (DAB), also known as digital sound broadcasting (DSB), and in digital television (digital TV).

There may be a need in signal processing situations to generate the cross-correlation function of two OFDM signals, or the auto-correlation function of a single OFDM signal. These signals are to be transmitted at VHF or UHF frequencies, and so in practice the relevant frequency band of the signal will need to be translated down to baseband for processing. In these circumstances the signal must be treated as a stream of complex-number samples, and the impulse responses of the paths and filters also become complex quantities.

For signals of finite power, the cross-correlation function $\varphi_{xy}(\tau)$ of two signals x(t) and y(t) is thus:

$$\varphi_{xy}(\tau) = \lim_{T \to \infty} \frac{1}{2T} \int_{-T}^{T} x^*(t-\tau)\, y(t)\, dt \qquad (1)$$

where $x^*$ denotes the complex conjugate of x.

The auto-correlation function $\varphi_{xx}(\tau)$ is the same as $\varphi_{xy}(\tau)$, but with y(t) replaced by x(t).

OFDM signals use a very large number of carriers and the data is split over the carriers such that the data rate on any given carrier is relatively low. That is to say the data period or active symbol period is longer than any interference delay that is likely to be encountered.

In an OFDM signal, the total symbol period is defined as the active symbol period plus a guard interval. The active symbol period is the reciprocal of the carrier spacing. When the guard interval is added to the data period of an OFDM signal, it allows the receiver to cope with a transmission path having delayed components, of delay up to the length of the guard interval. It has the desirable property of turning the convolution of the signal with the transmission path in effect into a circular one, equivalent to direct multiplication of corresponding discrete Fourier transform (DFT) frequency-domain coefficients. This makes equalisation in the receiver possible by simple direct division of the relevant frequency-domain coefficients.

It is well-known that correlation techniques can be used to determine the impulse response of a system. If the input to the system is x(t) and the resulting output is y(t), while the system under test has impulse response h(t), then it can be shown that the cross-correlation of the system input and output is the following convolution:

$$\varphi_{xy}(\tau) = h(\tau) \otimes \varphi_{xx}(\tau)$$

If the auto-correlation function $\varphi_{xx}(\tau)$ of the input signal approximates to a delta function, i.e. the spectrum of the input is essentially flat, then the cross-correlation yields the impulse response h(t) directly.

Provided that essentially random data is conveyed by an OFDM signal, and each carrier is transmitted at the same power level, then the spectrum of the OFDM signal is almost rectangular, that is essentially flat within the occupied band and falling away at the edges. Because of this flatness it may be supposed that the OFDM signal is itself a useful test signal with which to make in-service measurements of the frequency or impulse responses of a system or channel through which it passes, e.g. by the correlation technique just described.

However, a side-effect of adding the guard interval is to make the spectrum less flat. In particular, the spectrum contains regular ripples which are distinguishable when viewing the spectrum in fine detail, although it still appears flat when the occupied band is viewed as a whole. This will affect the accuracy of measurements made (e.g. using conventional correlation techniques) under the assumption that the spectrum is flat.

The present inventor proposes an alternative correlation for use with OFDM signals having a guard interval which does not suffer from the foregoing defect. Furthermore, in at least some cases it offers the advantage of reducing the time over which averaging needs to be performed.

European Patent Application EP-A-0 529 421 (and equivalent US-A-5,450,456) describes in the context of an OFDM system the generation of a test signal in at least one symbol block, the test signal containing periodically-continued differentially-coded self-orthogonal sequences of a constant amplitude modulated onto a part of the carrier frequencies within a symbol block. There is a correlation operation but it is performed for the purposes of OFDM synchronisation and thus is in the frequency domain of the OFDM signal, after the application of a fast Fourier transform (FFT) process in a receiver. The considerations are therefore quite different from the present problem.

The present invention is defined in the independent claims below, to which reference should now be made.

Advantageous features are set forth in the appendant claims.

The invention will now be described, by way of example, with reference to the drawings, in which:

Figure 1 is a block circuit diagram of a circuit for correlating OFDM signals embodying the invention; and
Figure 2 is a timing diagram illustrating the operation of the circuit of Figure 1.

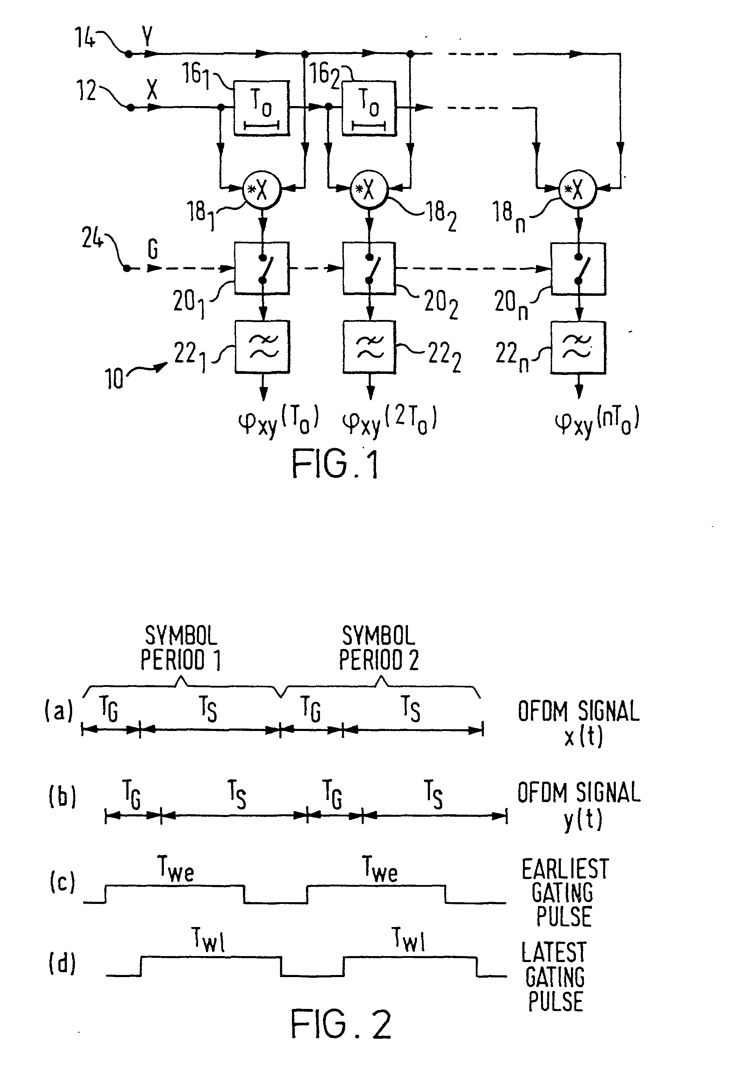

The theory of operation of the circuit illustrated in Figure 1 will first be described.

If two OFDM signals with identical sets of carrier frequencies are multiplied together in the manner required by equation (1) above (actually, the complex conjugate of one of them is taken before multiplication), then the result is a plethora of cross-modulation products. However, the OFDM signal has orthogonality properties. This means that if the integral of the multiplication is taken over a period equal to the reciprocal of the carrier spacing, and if the data modulating the carriers remains constant over that period, then most of the cross-modulation terms disappear.

This may be seen as follows. Consider for simplicity, two OFDM signals whose modulation is constant:

$$x(t) = \sum_{k=0}^{N-1} X_k e^{j(\omega_0 + k\omega_s)t}; \quad y(t) = \sum_{l=0}^{N-1} Y_l e^{j(\omega_0 + l\omega_s)t} \quad (2)$$

where

$\omega_0$ is the frequency of the first carrier,
$\omega_s$ is the carrier spacing,
N is the number of carriers, and
$X_k, Y_l$ represent the complex modulation on the carriers.

Suppose the 'product'

$$\pi_{xy}(t,\tau) = X^*(t)y(t+\tau)$$

is formed. This can be expanded as:

$$\pi_{xy}(t,\tau) = \sum_{k=0}^{N-1} X_k^* e^{-j(\omega_0 + k\omega_s)t} \sum_{l=0}^{N-1} Y_l e^{j(\omega_0 + l\omega_s)\overline{t+\tau}}$$
$$= \sum_{k=0}^{N-1} \sum_{l=0}^{N-1} X_k^* Y_l e^{j(l-k)\omega_s t} e^{j(\omega_0 + l\omega_s)\tau} \quad (3)$$

There are $N^2$ terms in all, but the 'beat frequencies' of many of them lie upon one another. Now suppose that this 'product' is integrated over a period $T_s = 1/f_s$. All the beat-frequency terms, except the N terms at DC, vanish:

$$\lambda_{xy}(\tau) = \frac{1}{T_s} \int_{T_1}^{T_1+T_s} \pi_{xy}(t,\tau)\,dt$$

$$= \frac{1}{T_s} \int_{T_1}^{T_1+T_s} \sum_{k=0}^{N-1} \sum_{l=0}^{N-1} X_k^* Y_l e^{j(l-k)\omega_s t} e^{j(\omega_0+l\omega_s)\tau}\,dt \quad (4)$$

$$= \sum_{k=0}^{N-1} X_k^* Y_k e^{j(\omega_0+k\omega_s)\tau}$$

It will be noted that the result does not depend on the time $T_1$ at which the integration starts.

Now it will be assumed that x(t) and y(t) are related. Let x(t) be the input, and y(t) the output, of some system with impulse response h(t). It follows that:

$$y(t) = x(t) \otimes h(t) .$$

If h(t) is limited in extent, so that h(t) is negligibly small for both t<0 and also if t exceeds the duration of the guard interval, then, as a consequence of the presence of the guard interval, this convolution effectively becomes circular, and one can write $Y_k = X_k H_k$. (This property is exploited in OFDM receivers, so if the output of the system is eventually to be usable as the input to a receiver, the limitation on h(t) must apply.)

The expression for the integral of the 'product' now becomes:

$$\lambda_{xy}(\tau) = \sum_{k=0}^{N-1} X_k^* X_k H_k e^{j(\omega_0+k\omega_s)\tau} \quad (5)$$

It will be noted that the term $X_k^* X_k$ is the power of carrier k at the input.

In fact the OFDM signal is divided into symbols, each with a guard interval and carrying random data on each of the carriers. The integration can now be performed over a carefully-timed period $T_s$ so that this period contains only contributions from the same symbol (so that there is no inter-symbol interference) and it can be done many times, once for each symbol. The above relation (5) will apply to each result. In general, the real value $X_k^* X_k$ for a particular carrier will have randomly different values from symbol to symbol, with a mean value $\overline{X_k^* X_k}$ equal to $\sigma_k^2$, say. If $\lambda_{xy}(\tau)$ is averaged over several symbols, the result will converge on the following value:

$$\overline{\lambda}_{xy}(\tau) \rightarrow \sum_{k=0}^{N-1} \sigma_k^2 H_k e^{j(\omega_0+k\omega_s)\tau} \quad (6)$$

If the input x(t) has the same power for each carrier, so that all the $\sigma_k^2$ have the same value $\sigma^2$, then $\sigma^2$ comes out as a constant factor.

Noting that $H_k$ is the system 'frequency response' at frequency $(\omega_0 + k\omega_s)$, then what remains in the summation may be recognised as the discrete form of the Fourier Transform, leading to the desired result:

$$\overline{\lambda}_{xy}(\tau) \rightarrow \sigma^2 h(\tau) \quad (7)$$

In summary, a modified correlation is performed in which the integration/averaging only takes place in a gated fashion, including only carefully-timed periods, of length $T_s$, aligned with the OFDM symbols. The result yields the impulse response h(t) of the system, just as if a continuous averaging had been used with some other x(t) having a genuinely flat spectrum.

A circuit for implementing the above functions will now be described with reference to Figure 1. The correlation-function generating circuit 10 shown in Figure 1 has an input 12 for receiving a first OFDM signal x(t) and an input 14 for receiving a second OFDM signal y(t) with which it is to be correlated. The signal y(t) is preferably the signal x(t) after having been passed through a circuit with impulse response h(t). However, x(t) and y(t) can be the same, in which case the circuit generates the auto-correlation function.

A series of delays $16_1$, $16_2$ ... $16_{(n-1)}$ are connected to the input 12, to provide (n - 1) incrementally delayed versions of the input signal x(t). Each delay provides a delay time $T_0$ which is chosen according to the desired resolution of measurement of h(t). Conveniently $T_0$ may be the same as the period of the sampling rate used to generate the OFDM signal originally. A series of multipliers $18_1$, $18_2$ ... $18_n$ each receive at one input a respective one of the signal x(t) and the delayed versions of it, and at their other input the other input signal y(t). The multipliers 18 are in fact complex multipliers, hence the addition of the star or asterisk before the multiplication sign. That is to say, they multiply two complex numbers of the form (a - jb) and (c + jd), where j is the square root of minus one. This generates a real part (ac + bd) and an imaginary part j(ad - bc). Complex multipliers are well-known in themselves and do not need to be further described. Where complex functions are involved much of the circuitry illustrated will need to be duplicated to provide signal paths for the real and imaginary components, as is in itself well-known.

Explaining this in a little more detail, the complex conjugate of a complex number is formed by changing the sign of its imaginary part. To form the complex product in the integral in equation (1) two processes would seem to be necessary:

(i)    form the complex conjugate $x^*(t-\tau)$ from $x(t-\tau)$, and
(ii)   perform the complex multiplication $x^*(t-\tau)y(t)$.

However it can be shown that simply changing the sign of certain terms calculated in a complex multiplication achieves the same result as if one of the inputs had first been conjugated, while requiring no additional hardware. That is:

$$\text{If } X = a + jb$$

$$\text{and } Y = c + jd$$

where a, b, c, and d are all real, and j is the square root of minus one, then the product:

$$XY = (a + jb)(c + jd) = (ac - bd) + j(ad + bc).$$

The corresponding product, in which the complex conjugate of X is taken, is however:

$$X^*Y = (a - jb)(c + jd) = (ac + bd) + j(ad - bc),$$

that is, the same as XY but with the signs of two terms both changed. To form either XY or $X^*Y$ directly from complex inputs X and Y thus requires the same number of operations. These are four real multiplications, one addition and one subtraction.

In Figure 1 the asterisk ($^*$) by one of the inputs of the multipliers 18 denotes an input which is, in effect, conjugated before the complex multiplication process, while requiring no more complexity than a normal complex multiplier.

The output of each of the complex multipliers is applied through a respective one of a series of gating circuits $20_1$, $20_2$ ... $20_n$ to a corresponding respective one of a series of low-pass filters $22_1$, $22_2$ ... $22_n$. The outputs of the filters 22 constitute the output of the correlation-function generating circuit and provide a series of coefficients representing the correlation function $\varphi_{xy}$.

The gating circuits 20 are closed (conductive) for the required period $T_s$. The gating circuits are controlled by pulses $T_w$ defining a gating window which are applied to an input 24. The timing of the pulses $T_w$ is important and is illustrated in Figure 2.

Figure 2 shows at (a) and (b) the OFDM input signals x(t) and y(t) for two symbol periods of the OFDM signal. Each symbol period comprises an active symbol period or data period, $T_s$ and a guard interval $T_g$. In fact, the expression "guard interval" is something of a misnomer; the guard interval is in fact occupied by an extension of the signal during the active symbol period. The guard interval is not a null period. All this is well-known to those skilled in the art of OFDM signals.

The guard interval in an OFDM signal is chosen to be greater than the maximum expected delay in the signal, and the guard interval occupies the minor part of the total symbol period. Thus, as shown in Figure 2, the signal y(t) will in general be displaced relative to the signal x(t) by an amount less than the guard interval $T_g$. The active symbol period is the reciprocal of the carrier spacing. In fact y(t) will consist of many superposed versions of x(t), but it is sufficient to consider just the most-delayed version for the present. Equally, x(t) can include some delayed components too, and what is shown is the earliest version.

The gating pulse $T_w$ has length $T_s$, and must be timed so as to coincide with the same symbol period in both signals x(t) and y(t). Thus, the earliest at which it can start is the commencement of the symbol period of the later of the two signals. This is shown as the pulse $T_{we}$ at (c) in Figure 2. The latest at which the gating pulse can end is the end of the symbol period of the earlier of the two signals. This is shown as the pulse $T_{wl}$ at (d) in Figure 2. In either event the pulse length is $T_S$.

Thus the timing of the gating pulse may be as for $T_{we}$ or as for $T_{wl}$, or may be anywhere in between. The circuitry necessary to produce such a pulse will be within the capability of those skilled in the art, and will be similar to the circuitry required for providing timing and synchronising pulses in an OFDM broadcast receiver.

The low-pass filter provides an averaging or integrating function. Averaging is required to smooth out power differences between the modulation of each OFDM carrier on successive symbols, resulting from the data modulation they carry. Where the signals are phase-modulated, then such averaging is not required, because $X_k^*X_k$ will be constant. This is the position in the proposed digital audio broadcasting (DAB) system. All carriers are then transmitted with the same amplitude. The shorter the averaging period, then the quicker the system is at responding to any temporal variations in the system impulse response h(t).

The averaging can thus be performed over a relatively short period, due to the gating method described, for a given accuracy. The gating exploits -the orthogonality of the signal to cancel out many of the cross-modulation terms.

In addition to smoothing out data-related power variations, if any, averaging may also be used in order to improve the signal-to-noise ratio of the measurement, if either x(t) or y(t) are contaminated by added noise.

Where averaging is used, it can in practice be implemented in a common circuit with the gates, as an 'integrate and dump' circuit.

It has been assumed that x(t) and y(t) are OFDM signals with the same power carried on each carrier. However, if they have already been subjected to a non-flat frequency response this will not be strictly true. The effect of this on the gated system of Figure 1 is still such as to yield the convolution of h(t) with the time-domain equivalent of the 'power spectrum' $X(f)X^*(f)$ of the input signal x(t).

The circuit illustrated in Figure 1 has been described in terms of a hardware embodiment, with discrete circuits. It will be appreciated that the circuitry may however be implemented in part or wholly in software. In this case Figure 1 should be regarded as equivalent to a flow chart.

OFDM signals are complex, consisting typically of many hundreds of closely-spaced carriers, with the active data period arbitrarily extended on each carrier by the addition of a guard interval. Seemingly, the correlation of such signals, a complex mathematical operation, would be difficult to execute and would require sophisticated processing circuitry. As seen from the foregoing, however, by using the gating method described, correlation can be effected in an extremely simple manner using surprisingly straightforward circuit elements.

Not only do the expected errors due to the presence of the guard interval not arise, but in addition the system has the further advantage that the correlation operation can be completed very quickly.

## Claims

1. A method of generating the correlation function of two input orthogonal frequency division multiplex signals, hereinafter referred to as OFDM signals, each signal comprising a plurality of carriers regularly spaced at a predetermined carrier spacing and each carrier carrying data in successive symbol periods; each symbol period consisting of a data period of duration equal to the reciprocal of the carrier spacing, and of a guard interval; the method being **characterised by**:

   multiplying one OFDM signal by a plurality of incrementally-delayed versions of the other OFDM signal; and gating and accumulating the resultants of the multiplication only for a time duration substantially equal in length to that of the data period of the OFDM signals and timed so as to coincide with the same symbol period in both signals, to produce a plurality of correlation coefficients.

2. A method according to claim 1, in which the multiplication is a complex multiplication.

3. A method according to claim 1 or 2, further comprising the step of integrating the output of the gating and accumulating step.

4. A method according to claim 3, in which the integrating is achieved by low-pass filtering.

5. A method according to claim 1, 2, 3 or 4, in which the two input OFDM signals are the same, such that the correlation coefficients represent the auto-correlation function of the signal.

6. Apparatus for generating the correlation function of two input orthogonal frequency division multiplex signals (X, Y), hereinafter referred to as OFDM signals, each signal comprising a plurality of carriers regularly spaced at a predetermined carrier spacing and each carrier carrying data in successive symbol periods; each symbol period consisting of a data period of duration equal to the reciprocal of the carrier spacing, and of a guard interval; the apparatus being **characterised by**:

   multiplying means (18) for multiplying one OFDM signal by a plurality of incrementally-delayed versions of the other OFDM signal; and
   means (20) coupled to the outputs of the multiplying means for gating and accumulating the resultants of the multiplication only for a time duration substantially equal in length to that of the data period of the OFDM signals and timed so as to coincide with the same symbol period in both signals, to produce a plurality of correlation coefficients.

7. Apparatus according to claim 6, in which the multiplying means comprises a plurality of complex multipliers ($18_i$, ... $18_n$) .

8. Apparatus according to claim 6 or 7, further comprising integrating means coupled to the output of the gating and accumulating means for integrating the output thereof.

9. Apparatus according to claim 8, in which the integrating means comprises a low-pass filter (22).

10. Apparatus according to claim 6, 7, 8 or 9, further comprising a series of incremental delays (16) to provide the incrementally-delayed versions of the said other OFDM signal to the multiplying means (18).

**Patentansprüche**

1. Verfahren zum Erzeugen der Korrelationsfunktion von zwei orthogonalen Frequenzmultiplexsignalen, nachfolgend OFDM-Signale genannt, wobei jedes Signal eine Mehrzahl von Trägern umfasst, die regelmäßig mit einem vorbestimmten Trägerabstand beabstandet sind und wobei jeder Träger Daten in aufeinander folgenden Symbolperioden führt; wobei jede Symbolperiode aus einer Datenperiode mit einer dem Reziprok des Trägerabstands entsprechenden Dauer und einem Schutzintervall besteht, wobei das Verfahren durch die folgenden Schritte gekennzeichnet ist:

   Vervielfachen eines OFDM-Signals mit einer Mehrzahl von inkremental verzögerten Versionen des anderen OFDM-Signals; und
   Torsteuern und Akkumulieren der Resultanten der Vervielfachung nur für eine Zeitdauer, die im Wesentlichen die gleiche Länge wie die Datenperiode der OFDM-Signale hat, und zeitlich so gesteuert, dass sie mit derselben Symbolperiode in beiden Signalen übereinstimmen, um eine Mehrzahl von Korrelationskoeffizienten zu erzeugen.

2. Verfahren nach Anspruch 1, bei dem die Vervielfachung eine komplexe Vervielfachung ist.

3. Verfahren nach Anspruch l oder 2, ferner umfassend den Schritt des Integrierens des Ausgangs des Torsteuerungs- und Akkumulationsschrittes.

4. Verfahren nach Anspruch 3, bei dem die Integration durch Tiefpassfilterung erzielt wird.

5. Verfahren nach Anspruch 1, 2, 3 oder 4, bei dem die beiden Eingangs-OFDM-Signale gleich sind, so dass die Korrelationskoeffizienten die Autokorrelationsfunktion des Signals ist.

**6.** Vorrichtung zum Erzeugen der Korrelationsfunktion von zwei orthogonalen Frequenzmultiplexeingangssignalen (X, Y), nachfolgend OFDM-Signale genannt, wobei jedes Signal eine Mehrzahl von Trägern umfasst, die regelmäßig mit einem vorbestimmten Trägerabstand beabstandet sind und wobei jeder Träger Daten in aufeinander folgenden Symbolperioden führt; wobei jede Symbolperiode aus einer Datenperiode mit einer dem Reziprok des Trägerabstandes entsprechenden Dauer und einem Schutzinterval1 besteht, wobei die Vorrichtung **gekennzeichnet ist durch**:

Vervielfachungsmitte1 (18) zum Vervielfachen eines OFDM-Signals mit einer Mehrzahl von inkremental verzögerten Versionen des anderen OFDM-Signals; und
mit den Ausgängen der Vervielfachungsmittel gekoppelte Mittel (20) zum Torsteuern und Akkumulieren der Resultanten der Vervielfachung nur für eine Zeitdauer, die im Wesentlichen die gleiche Länge wie die Datenperiode der OFDM-Signale hat, und zeitlich so gesteuert, däss sie mit derselben Symbolperiode in beiden Signalen übereinstimmen, um eine Mehrzahl von Korrelationskoeffizienten zu erzeugen.

**7.** Vorrichtung nach Anspruch 6, bei der das
Vervielfachungsmit-tel eine Mehrzahl von komplexen Vervielfachern ($18_1$, ... $18_n$,) umfasst.

**8.** Vorrichtung nach Anspruch 6 oder 7, ferner umfassend Integrationsmittel, die mit dem Ausgang des Torsteuerungsund Akkumulationsmittel zum Integrieren des Ausgangs davon gekoppelt sind.

**9.** Vorrichtung nach Anspruch 8, bei dem das Integrationsmittel einen Tiefpassfilter (22) umfasst.

**10.** Vorrichtung nach Anspruch 6, 7, 8 oder 9, ferner umfassend eine Reihe von Inkrementalverzögerungsgliedern (16), um die inkremental verzögerten Versionen des genannten anderen OFDM-Signals zum Vervielfachungsmittel (18) bereitzustellen.

## Revendications

**1.** Procédé de génération de la fonction de corrélation de deux signaux multiplexés par répartition en fréquence orthogonaux d'entrée, appelés ici signaux OFDM, chaque signal comprenant une pluralité de porteuses régulièrement espacées à un espacement de porteuses déterminé et chaque porteuse acheminant des données dans des périodes de symboles successives ; chaque période de symboles consistant en une période de données de durée égale à la réciproque de l'espacement de porteuses, et en un intervalle de garde : le procédé étant **caractérisé par** :

la multiplication d'un signal OFDM par une pluralité de versions retardés incrémentiellement de l'autre signal OFDM ; et
la transmission et l'accumulation des résultantes de la multiplication uniquement pendant une durée de temps sensiblement égale en longueur à celle de la période de données des signaux OFDM et cadencée de manière à coïncider avec la même période de symboles dans les deux signaux, afin de produire une pluralité de coefficients de corrélation.

**2.** Procédé selon la revendication 1, dans lequel la multiplication est une multiplication complexe.

**3.** Procédé selon la revendication 1 ou 2, comprenant en outre l'étape d'intégration de la sortie de l'étape de transmission et d'accumulation.

**4.** Procédé selon la revendication 3, dans lequel l'intégration est réalisée par filtrage passe-bas.

**5.** Procédé selon la revendication 1, 2, 3 ou 4, dans lequel les deux signaux OFDM d'entrée sont les mêmes, si bien que les coefficients de corrélation représentent la fonction d'auto-corrélation du signal.

**6.** Dispositif pour générer la fonction de corrélation de deux signaux mulitplexés par répartition de fréquence orthogonaux d'entrée (X, Y), appelés ci-après signaux OFDM, chaque signal comprenant une pluralité de porteuses régulièrement espacées à un espacement de porteuses déterminé et chaque porteuse acheminant des données dans des périodes de symboles successives ; chaque période de symboles consistant en une période de données de durée égale à la réciproque de l'espacement de porteuses, et en un intervalle de garde ; le dispositif étant **caractérisé par**:

un moyen de multiplication (18) pour multiplier un signal OFDM par une pluralité de versions retardées incrémentiellement de l'autre signal OFDM ; et

un moyen (20) couplé aux sorties du moyen de multiplication pour transmettre et accumuler les résultantes de la multiplication uniquement pendant une durée de temps sensiblement égale en longueur à celle de la période de données des signaux OFDM et cadencée de manière à coïncider avec la même période de symboles dans les deux signaux, afin de produire une pluralité de coefficients de corrélation.

7. Dispositif selon la revendication 6, dans. lequel le moyen de multiplication comprend une pluralité de multiplicateurs complexes ($18_1$, ... , $18_n$).

8. Dispositif selon la revendication 6 ou 7, comprenant en outre un moyen d'intégration couplé à la sortie du moyen de transmission et d'accumulation pour en intégrer la sortie. .

9. Dispositif selon la revendication 8, dans lequel le moyen d'intégration comprend un filtre passe-bas (2).

10. Dispositif selon la revendication 6, 7, 8 ou 9, comprenant en outre une série de retards incrémentiels (16) afin de fournir les versions retardées incrémentiellement dudit autre signal OFDM au moyen de multiplication (18).

FIG.1

(a) SYMBOL PERIOD 1    SYMBOL PERIOD 2
$T_G$    $T_S$    $T_G$    $T_S$    OFDM SIGNAL $x(t)$

(b) $T_G$    $T_S$    $T_G$    $T_S$    OFDM SIGNAL $y(t)$

(c) $T_{we}$    $T_{we}$    EARLIEST GATING PULSE

(d) $T_{wl}$    $T_{wl}$    LATEST GATING PULSE

FIG. 2